# EUROPEAN PATENT SPECIFICATION

(11) **EP 3 605 246 B1**
(45) Date of publication and mention of the grant of the patent: **20.01.2021**
(21) Application number: 17909210.1
(22) Date of filing: 10.05.2017
(51) Int. Cl.: G05B 9/03, G05B 19/048, G05B 19/418, G05B 19/042

(54) **CONTROL DEVICE AND ALTERNATIVE SELECTION PROGRAM**
STEUERUNGSVORRICHTUNG UND ALTERNATIVES AUSWAHLPROGRAMM
DISPOSITIF DE COMMANDE ET PROGRAMME DE SÉLECTION ALTERNATIF

(43) Date of publication of application: 05.02.2020
(73) Proprietor: Mitsubishi Electric Corporation, Chiyoda-ku Tokyo 100-8310 (JP)
(72) Inventor: TSUKAMOTO, Yohei, Tokyo 100-8310 (JP)
(74) Representative: Mewburn Ellis LLP
(86) International application number: PCT/JP2017/017726
(87) International publication number: WO 2018/207293

(56) References cited:
- JP-A- S 575 162
- JP-A- H03 194 601
- JP-A- S63 238 633
- JP-A- S63 238 633
- JP-A- 2003 241 736
- US-B1- 6 745 341

## Description

### Technical Field

The present invention relates to a technique for selecting an alternative machine when a control device fails.

### Background Art

In a plant system, control devices for controlling equipments are multiplexed.

Multiplexing schemes are classified based on how redundancy is provided. A scheme of preparing one backup device for one device is referred to as a 1:1 scheme. On the other hand, a scheme of preparing n backup devices for k devices is referred to as a k-out-of-n scheme. The k-out-of-n scheme allows the system to continue even if a failure occurs in any combination of devices equal to or less than n devices.

In the 1:1 scheme, the structure and operation are simple and easy to understand. And, the time required for switching from a control system to a standby system in the event that a failure occurs is short.

However, the number of devices required is doubled, and thus the cost is high.

In the k-out-of-n scheme, the operation is complex. And, the switching time in the event that a failure occurs tends to be long.

However, the number of devices required is less than that in the 1:1 scheme, and thus the cost is low.

The k-out-of-n scheme has been actively adopted in the field of information processing with mild restriction on the switching time. However, the k-out-of-n scheme has been rarely adopted in the field of control with strict requirements for real-time performance.

If the processing time required until recovery is long in the event that a failure occurs, the requirements of the switching time cannot be satisfied, leading to a serious failure in the entire system. In particular, the processing of reaching accord among devices to select an alternative machine is complex and requires time.

### Citation List

### Patent Literature

Patent Literature 1: JP H8-27735 Patent literature 1 can also be retrieved under publication number JP S63 238633.

### Non-Patent Literature

Non-Patent Literature 1: Yasushi Kuno, "Distributed Algorithm" in Knowledge Forest, The Institute of Electronics, Information and Communication Engineers, 2012, Group 6, Volume 3, Chapter 5, pp. 13-16.

### Summary of Invention

### Technical Problem

A method of reaching accord among devices by mutual communication of the devices with one another is disclosed in Non-Patent Literature 1.

However, a delay on the order of milliseconds occurs, and it is thus difficult to adopt the method of Non-Patent Literature 1 in the field of control.

A method of following a rule which defines a relation between a control device and a backup machine by using dedicated hardware is disclosed in Patent Literature 1. This shortens time.

However, the dedicated hardware is required, and it is thus difficult to apply the method of Patent Literature 1 to existing systems. Moreover, additional cost is required.

Furthermore, the relation between the control device and the backup machine is fixed by the rule, and thus the method of Patent Literature 1 cannot back up an important device by placing a higher priority thereon.

The present invention has an object of allowing, when a control device fails, a process having being executed by the failing control device to be executed by a normal control device without communication between normal control devices and without using dedicated hardware.

### Solution to Problem

A control device included in a plurality of control devices as set out in claim 1 is provided.

### Advantageous Effects of Invention

According to the present invention, when a control device fails, the process having being executed by the failing control device can be executed by a normal control device without communication between normal control devices and without using dedicated hardware.

### Brief Description of Drawings

Fig. 1 is a structure diagram of a controlling system 100 in Embodiment 1.
Fig. 2 is a structure diagram of a control device 200 in Embodiment 1.
Fig. 3 is a flowchart of a control method in Embodiment 1.
Fig. 4 illustrates a selection table 211 in Embodiment 1.
Fig. 5 is a flowchart of alternative selection (S110) in Embodiment 1.
Fig. 6 is a structure diagram of a selection table 212 in Embodiment 2.
Fig. 7 is a flowchart of a control method in Embodiment 2.
Fig. 8 is a flowchart of alternative selection (S120) in Embodiment 2.
Fig. 9 is a structure diagram of the control device 200 in Embodiment 3.
Fig. 10 is a structure diagram of a selection table 213 in Embodiment 3.
Fig. 11 is a structure diagram of the selection table 213 in Embodiment 3.
Fig. 12 is a flowchart of table generation (S130) in Embodiment 3.
Fig. 13 illustrates a flow of priority information in Embodiment 3.
Fig. 14 illustrates a flow of priority information in Embodiment 3.
Fig. 15 is a hardware structure diagram of the control device 200 in the embodiments.

### Description of Embodiments

In embodiments and drawings, the same components and corresponding components are provided with the same reference character. Description of the components provided with the same reference characters are omitted or simplified as appropriate. An arrow in the drawings mainly indicates a flow of data or a flow of process.

### Embodiment 1.

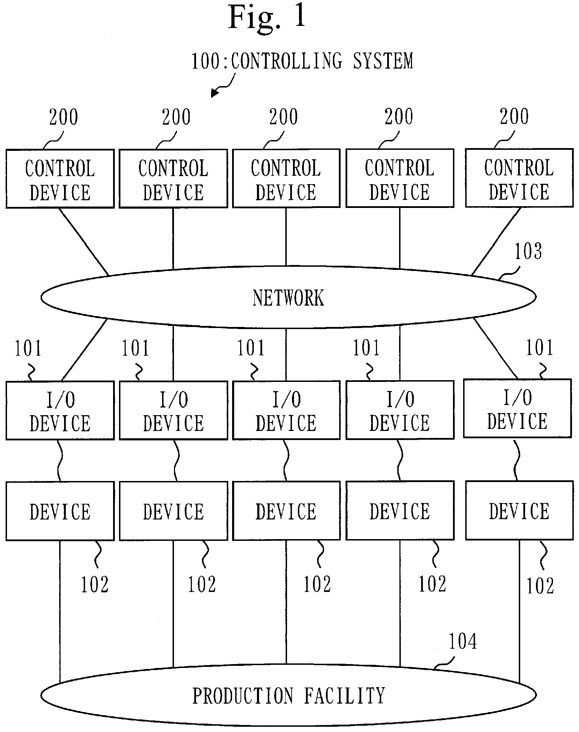

An embodiment for executing, when a control device fails, by a normal control device, a process having being executed by the failing control device is described based on Fig. 1 to Fig. 5.

### ***Description of Structure***

Fig. 1 illustrates a controlling system 100. The controlling system 100 is a controlling system called a plant system.

The controlling system 100 includes a plurality of control devices 200, a plurality of I/O devices 101, a plurality of equipments 102, a network 103, and a production facility 104. I/O is an abbreviation of input/output.

The control devices 200 control the epuipments 102 via the I/O devices 101 by communicating with the I/O devices 101 via the network 103.

Specifically, the control devices 200 accept the states of the epuipments 102 from the I/O devices 101, and provide instructions to the I/O devices 101.

The epuipments 102 are devices such as an actuator and solenoid valve, and operate the production facility 104.

In the controlling system 100, the control devices 200 are multiplexed by the k-out-of-n scheme.

An control device 200 that is operating is referred to as a control device 200 of a control system, and a control device 200 that stands by for backup is referred to as a control device 200 of a standby system. The control devices 200 of the control system are collectively referred to as the control system, and the control devices 200 of the standby system are collectively referred to as the standby system.

For example, the controlling system 100 includes five control devices 200. Three control devices 200 are of the control system, and the remaining control devices 200 (two control devices 200) are of the standby system.

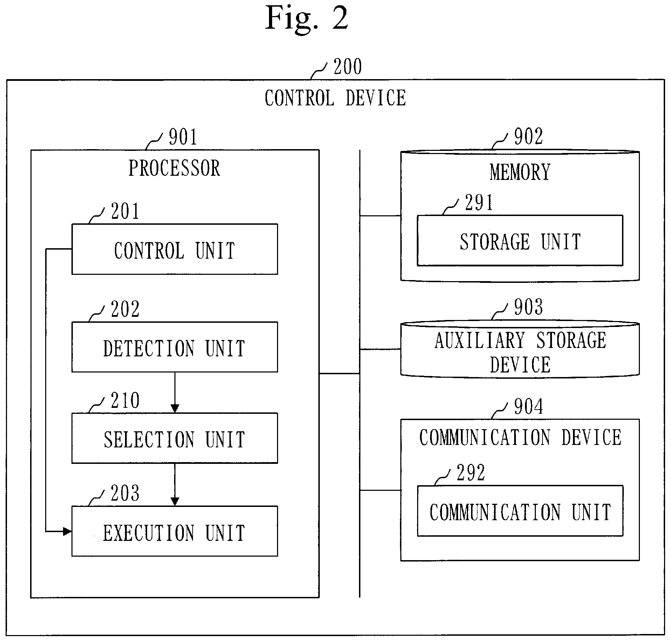

Based on Fig. 2, the structure of the control device 200 is described.

The control device 200 is a computer provided with hardware devices such as a processor 901, a memory 902, an auxiliary storage device 903, and a communication device 904. These hardware devices are mutually connected via signal lines.

The processor 901 is an integrated circuit (IC) for performing arithmetic operation process, and controls other hardware. For example, the processor 901 is a central processing unit (CPU), digital signal processor (DSP), or graphics processing unit (GPU).

The memory 902 is a volatile storage device. The memory 902 is also referred to as a main storage device or main memory. For example, the memory 902 is a random access memory (RAM). Data stored in the memory 902 is stored in the auxiliary storage device 903 as required.

The auxiliary storage device 903 is a non-volatile storage device. For example, the auxiliary storage device 903 is a read only memory (ROM), hard disk drive (HDD), or flash memory. Data stored in the auxiliary storage device 903 is loaded onto the memory 902 as required.

The communication device 904 is a device for performing communication, that is, a receiver and a transmitter. For example, the communication device 904 is a communication chip or network interface card (NIC).

The control device 200 includes software components such as a control unit 201, a detection unit 202, a selection unit 210, and an execution unit 203. The software components are components implemented by software.

An alternative selection program for causing a computer to function as the control unit 201, the detection unit 202, the selection unit 210 and the execution unit 203 are stored in the auxiliary storage device 903. The alternative selection program is loaded onto the memory 902 to be executed by the processor 901.

Furthermore, an operating system (OS) is stored in the auxiliary storage device 903. The OS is at least partially loaded onto the memory 902 to be executed by the processor 901.

That is, the processor 901 executes the alternative selection program while executing the OS.

Data acquired by executing the alternative selection program is stored in a storage device such as the memory 902, the auxiliary storage device 903, a register in the processor 901, or a cache memory in the processor 901.

The memory 902 functions as a storage unit 291 for storing data. However, in place of or together with the memory 902, another storage device may function as the storage unit 291.

The communication device 904 functions as a communication unit 292 for data communication.

The control device 200 may be provided with a plurality of processors which replace the processor 901. The plurality of processors share the role of the processor 901.

The alternative selection program can be stored, in a computer-readable manner, in a non-volatile storage medium such as a magnetic disk, optical disk, or flash memory. The non-volatile storage medium is a non-transitory tangible medium.

### ***Description of Operation****

The operation of the control device 200 corresponds to a control method and an alternative selection method. Also, the procedure of the control method corresponds to the procedure of a control program, and the procedure of the alternative selection method corresponds to the procedure of the alternative selection program.

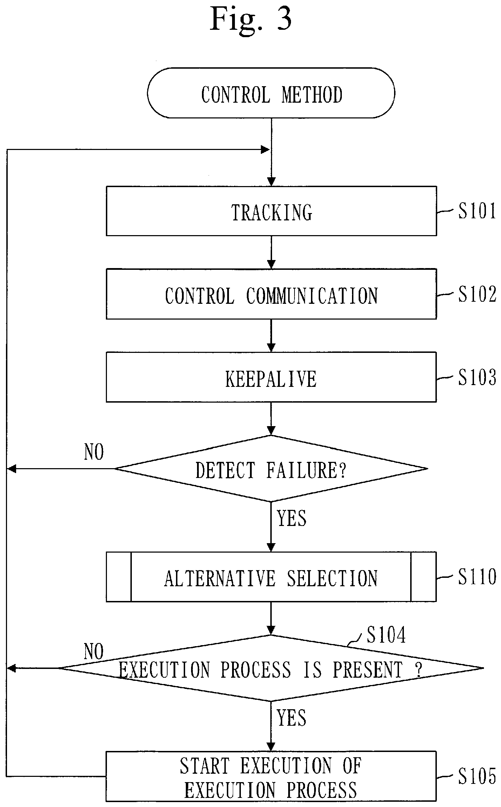

Based on Fig. 3, the control method is described.

At step S101, the control unit 201 performs tracking.

Tracking is a process of notifying the standby system from the control system of a current processing state so that the operation is immediately transferred from the control system to the standby system in the event that a failure occurs. Note that tracking is a normal process to be performed by the controlling system of the k-out-of-n scheme.

Specifically, in the control device 200 of the control system, the control unit 201 generates a snapshot representing a current processing state, and transmits the generated snapshot to another control device 200 via the communication unit 292. Also, the control unit 201 receives a snapshot transmitted from another control device 200 of the control system via the communication unit 292, and stores the received snapshot in the storage unit 291.

Specifically, in the control device 200 of the standby system, the control unit 201 receives a snapshot transmitted from the control device 200 of the control system via the communication unit 292, and stores the received snapshot in the storage unit 291.

At step S102, the control unit 201 performs control communication.

The control communication is a process of exchanging information for control between the control devices 200 of the control system. Note that the control communication is a normal process to be performed by the controlling system.

Specifically, in the control device 200 of the control system, the control unit 201 generates control information, and transmits the generated control information to another control device 200 of the control system via the communication unit 292. Also, the control unit 201 receives control information transmitted from another control device 200 of the control system via the communication unit 292, and performs specific control based on the received control information.

In the control device 200 of the standby system, step S102 is not executed.

At step S103, the detection unit 202 performs keepalive.

Keepalive is a process of confirming the presence of a failing control device 200. Note that keepalive is a normal process to be performed by the controlling system of the k-out-of-n scheme.

Specifically, in the control device 200 of each of the control system and the standby system, the detection unit 202 transmits a response request packet to another control device 200 via the communication unit 292. Also, the detection unit 202 receives a response request packet transmitted from another control device 200 via the communication unit 292, and transmits a response packet to the transmission source of the response request packet via the communication unit 292. Furthermore, for a certain time, the detection unit 202 receives a response packet transmitted from another control device 200 via the communication unit 292. Then, the detection unit 202 detects another control device 200 other than the transmission source of the response packet received during the certain time. The detected other control device 200 is a failing control device 200.

When a failing control device 200 is detected, the process proceeds to step S110.

When a failing control device 200 is not detected, the process proceeds to step S101.

At step S110, the selection unit 210 performs alternative selection.

Alternative selection is a process for selecting a control device 200 as an alternative to the failing control device 200.

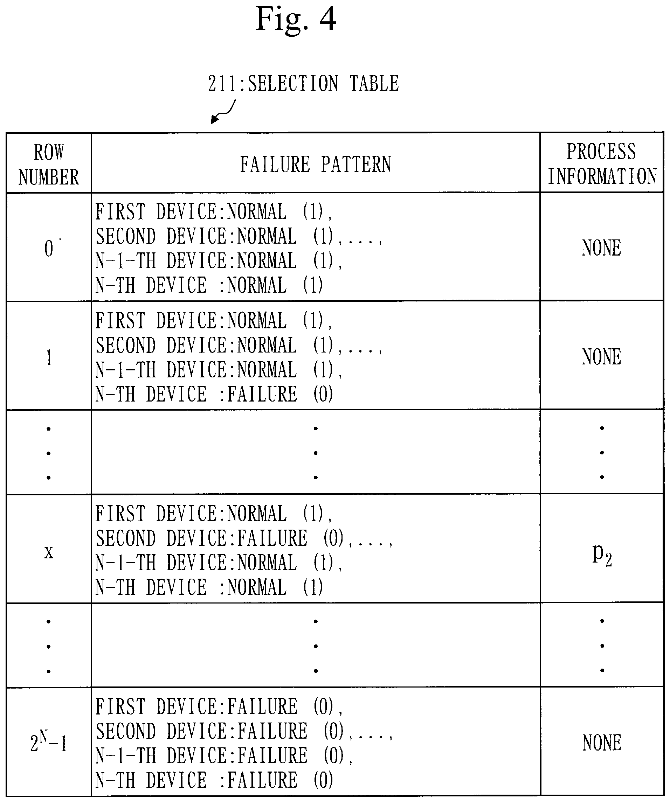

Based on Fig. 4, a selection table 211 is described.

The selection table 211 is an example of a selection table for use in alternative selection (S110). The selection table 211 is stored in advance in the storage unit 291.

The selection table 211 has columns of row number, failure pattern, and process information, respectively. On the selection table 211, row numbers, failure patterns, and process information are mutually associated with one another.

The column of row number indicates row number. The row number identifies a row on the selection table 211.

The column of failure pattern indicates a failure pattern. The failure pattern is a combination of a normal control device 200 and a failing control device 200. x-th device: normal (1) means that an x-th control device 200 is in a normal state. x-th device: failure (0) means that an x-th control device 200 is in a failure state.

The number of failure patterns indicated in the column of failure pattern is 2^{∧}N. 2^{∧}N means the N-th power of 2, where N is the number of control devices 200 provided to the controlling system 100.

The number N of control devices 200 provided to the controlling system 100 is a total of the number k of control devices 200 of the control system and the number n of control devices 200 of the standby system.

A first control device 200 to a k-th control device 200 are the control devices 200 of the control system, and a k+1-th control device 200 to an N-th control device 200 are the control devices 200 of the standby system.

The column of process information indicates process information. The process information indicates a process or unnecessity (none).

The process indicated in the column of process information is a process to be newly executed. Specifically, the process indicated in the column of process information is a process having being executed by the control device 200 in a failure state.

Unnecessity indicated in the column of the process information means that a process to be newly executed is absent. "None" means unnecessity.

The column of failure pattern is the same in all control devices 200.

That is, the plurality of failure patterns included in the selection table 211 in a specific control device 200 are identical to the plurality of failure patterns included in the selection table 211 in another control device 200.

The column of process information varies for each control device 200.

That is, the plurality of pieces of process information included in the selection table 211 in a specific control device 200 vary from the plurality of pieces of process information included in the selection table 211 in another control device 200.

The column of process information is preferably set so that all processes in a stationary state are executed in failure patterns as many as possible.

The stationary state is a state in which no failure occurs, and all processes in the stationary state are all processes to be executed by the control system in the controlling system 100 in the stationary state.

For example, when only the k-th control device 200 of the control system fails, a process mₖ is assigned to the k+1-th control device 200 of the standby system by alternative selection (S110). The process mₖ is a process to be executed by the k-th control device 200 of the control system in a stationary state.

In alternative selection (S110), the selection unit 210 selects, from the selection table 211, process information associated with the failure pattern of the controlling system 100.

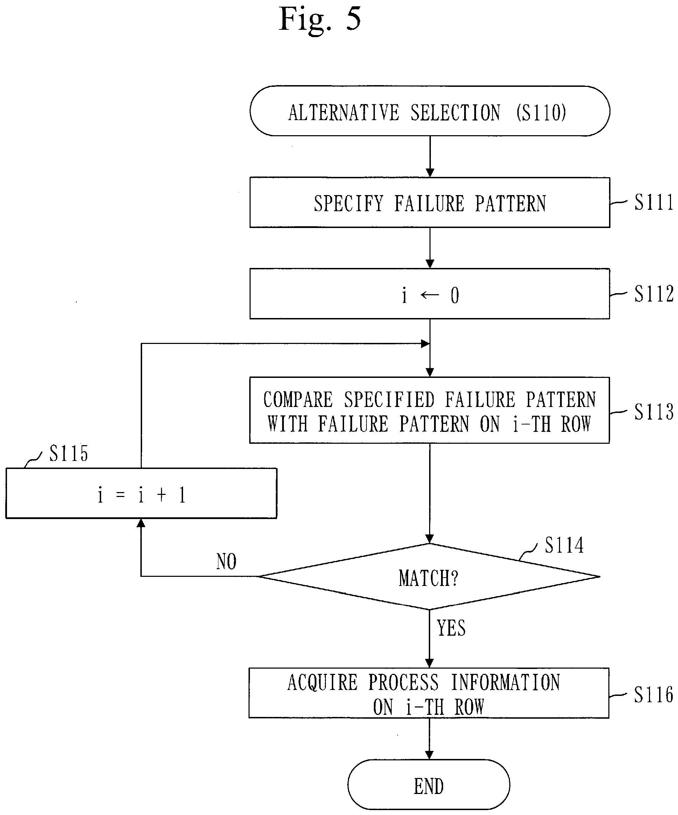

Based on Fig. 5, the procedure of alternative selection (S110) is described.

At step S111, the selection unit 210 specifies a current failure pattern of the controlling system 100.

Specifically, the selection unit 210 specifies a combination of a normal control device 200 and the failing control device 200 based on the result at step S103 (refer to Fig. 3). The specified combination is a current failure pattern of the controlling system 100.

At step S112, the selection unit 210 sets a variable i at 0.

At step S113, the selection unit 210 acquires a failure pattern on an i-th row from the selection table 211.

Then, the selection unit 210 compares the failure pattern specified at step Sill with the failure pattern on the i-th row.

At step S114, the selection unit 210 determines whether the failure pattern specified at step S111 matches the failure pattern on the i-th row.

When the failure pattern specified at step Sill matches the failure pattern on the i-th row, the process proceeds to step S116.

When the failure pattern specified at step S111 does not match the failure pattern on the i-th row, the process proceeds to step S115.

At step S115, the selection unit 210 adds 1 to the value of the variable i.

After step S115, the process proceeds to step S113.

At step S116, the selection unit 210 acquires process information on the i-th row from the selection table 211.

Returning back to Fig. 3, description continues from step S104.

At step S104, the control unit 201 determines whether an execution process is present.

The execution process is a process indicated by the process information acquired at alternative selection (S110).

Specifically, the control unit 201 determines whether the process information acquired at alternative selection (S110) indicates a process. When the process information indicates a process, an execution process is present. When the process information indicates unnecessity, an execution process is absent.

When an execution process is present, the process proceeds to step S105.

When an execution process is absent, the process proceeds to step S101.

At step S105, the execution unit 203 starts execution of the execution process.

Specifically, the execution unit 203 operates as follows.

First, the execution unit 203 selects a snapshot of the failing control device 200 from the storage unit 291.

Next, the execution unit 203 restores a process state of the failing control device 200 before the failure by using the selected snapshot.

Then, the execution unit 203 starts execution of the execution process in the process state of the failing control device 200 before the failure.

With this, the process having being executed by the failing control device 200 is transferred to and executed by the alternative control device 200.

### ***Effects of Embodiment 1***

In Embodiment 1, for all failure patterns, it is defined in advance which control device 200 executes which process, that is, which control device 200 of the standby system serves as an alternative to execute which process.

This allows a relation between the control device (control device 200 of the control system) and the backup machine (control device 200 of the standby system) to be flexibly defined with a short delay time by using only general-purpose hardware.

The time required for alternative selection (S110) depends on the number of times of comparing the failure patterns. The number of times of comparing the failure patterns is 2^{∧}N at maximum. The processing time at a time is on the order of several tens of nanoseconds to several hundreds of nanoseconds.

When the number N of control devices 200 is approximately ten, the time required for alternative selection (S110) is several microseconds at maximum.

Therefore, alternative selection in Embodiment 1 is at high speeds compared with the conventional method of performing a handshake among the control devices of the control system, and is effective in a system where switching with several milliseconds is a requirement.

### Embodiment 2.

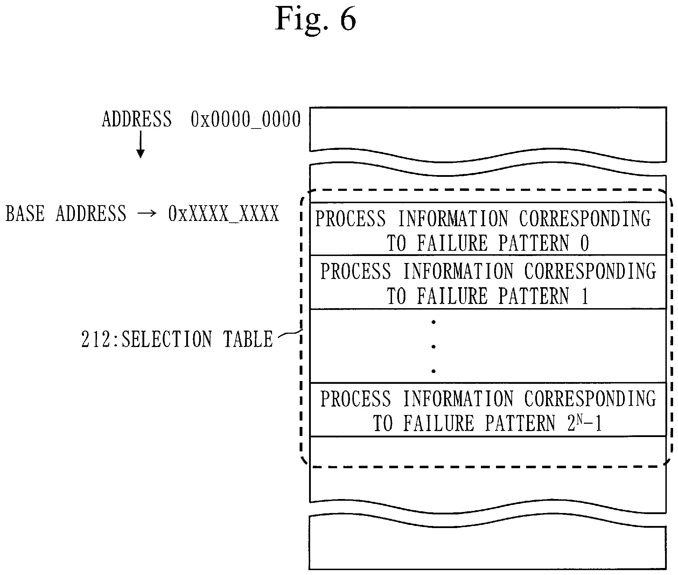

As for a method of storing a selection table for shortening the time required for alternative selection, differences from Embodiment 1 are mainly described based on Fig. 6 to Fig. 8.

### ***Description of Structure***

Based on Fig. 6, the structure of a selection table 212 is described.

The selection table 212 is stored in a memory region after a base address.
The base address is a memory address defined as a head address of the selection table 212.

The selection table 212 has individual regions as many as the number of failure patterns. When the number of control devices 200 is N, the selection table 212 has 2^{∧}N individual regions.

In each individual region, process information corresponding to a failure pattern is set.

The individual region is a portion identified with a memory address acquired by using a value in binary form indicating a failure pattern.

Specifically, the individual region is a memory region of a portion identified by a memory address acquired by adding the base address to the value in binary form indicating the failure pattern.

The value in binary form indicating the failure pattern is a value represented as a bit string formed of a plurality of bits corresponding to the plurality of control devices 200.

When the number of control devices 200 is N, each failure pattern is represented as a bit string of N bits. One bit in the bit string indicates a bit value representing a state of one control device 200.

Assume that there are five control devices 200, a first control device 200 is in a failure state, and a second control device 200 to a fifth control device 200 are in a normal state. Also assume that a bit value "1" represents a normal state and a bit value "0" represents a failure state. In this case, the first bit becomes "0" and the second bit to the fifth bit become "1", and thus five bits representing a failure pattern is "11110".

### ***Description of Operation***

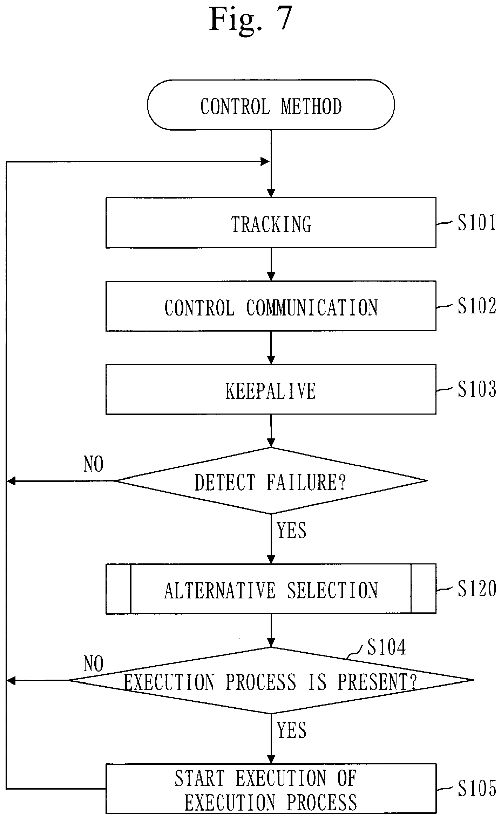

Based on Fig. 7, a control method is described.

Each step from step S101 to step S103, step S104, and step S105 are as described in Embodiment 1 (refer to Fig. 3).

At step S103, when a failing control device 200 is detected, alternative selection (S120) is executed.

In alternative selection (S120), the selection unit 210 calculates a memory address corresponding to the failure pattern of the controlling system 100 by using the value in binary form indicating the failure pattern of the controlling system 100. Then, the selection unit 210 acquires process information from the memory region identified with the calculated memory address.

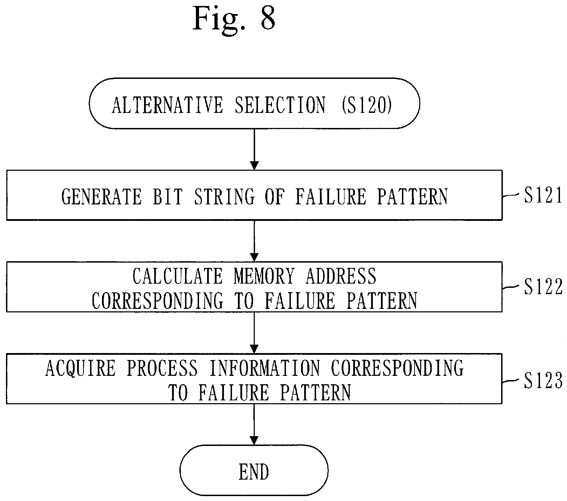

Based on Fig. 8, the procedure of alternative selection (S120) is described.

At step S121, the selection unit 210 generates a bit string of a current failure pattern of the controlling system 100.

Specifically, the selection unit 210 specifies the current failure pattern of the controlling system 100, and generates a bit string indicating the specified failure pattern.

A method of specifying a current failure pattern of the controlling system 100 is identical to the method at step Sill of Embodiment 1 (refer to Fig. 5).

At step S122, the selection unit 210 calculates a memory address corresponding to the current failure pattern of the controlling system 100.

Specifically, the selection unit 210 adds the base address to the value in binary form indicated by the bit string generated at step S121. A memory address acquired by this is a memory address corresponding to the current failure pattern of the controlling system 100.

At step S123, the selection unit 210 acquires, from the selection table 212, process information corresponding to the current failure pattern of the controlling system 100.

Specifically, the selection unit 210 acquires process information from a memory region identified with the memory address calculated at step S122. The acquired process information is process information corresponding to the current failure pattern of the controlling system 100.

### *** Effects of Embodiment 2***

In Embodiment 2, the selection table 212 is stored in successive regions of the main memory (memory 902).

This allows a relation between the control device (control device 200 of the control system) and the backup machine (control device 200 of the standby system) to be flexibly defined with a short delay time by using only general-purpose hardware.

The time required for alternative selection (S120) is a time required for one addition and one memory access. This time is on the order of several tens of nanoseconds to several hundreds of nanoseconds.

Therefore, alternative selection in Embodiment 2 is at high speeds compared with the method of performing a handshake among the control devices of the control system, and is effective in a system where switching with several milliseconds is a requirement.

### Embodiment 3.

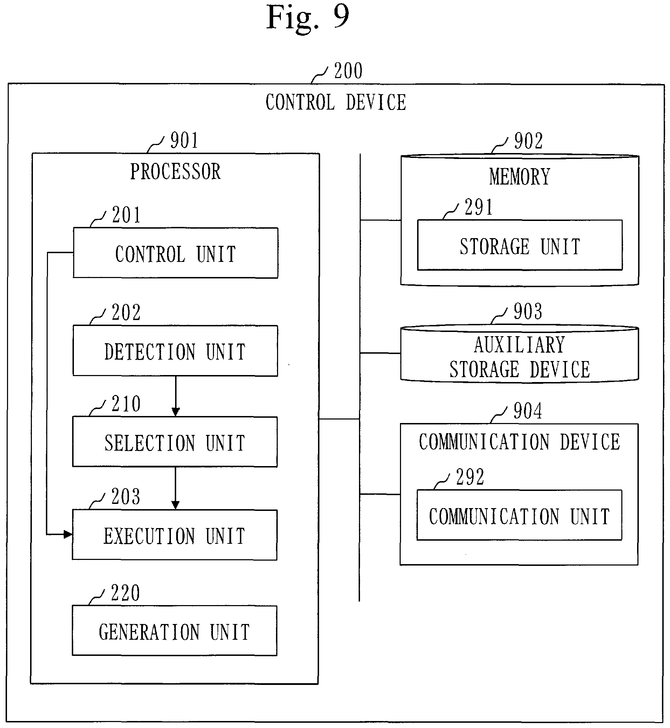

As for an embodiment of generating a selection table, differences from Embodiment 1 and Embodiment 2 are mainly described based on Fig. 9 to Fig. 14.

### ***Description of Structure***

Based on Fig. 9, the structure of the control device 200 is described.

The control device 200 is further provided with generation unit 220 as a software component.

The alternative selection program further causes the computer to function as the generation unit 220.

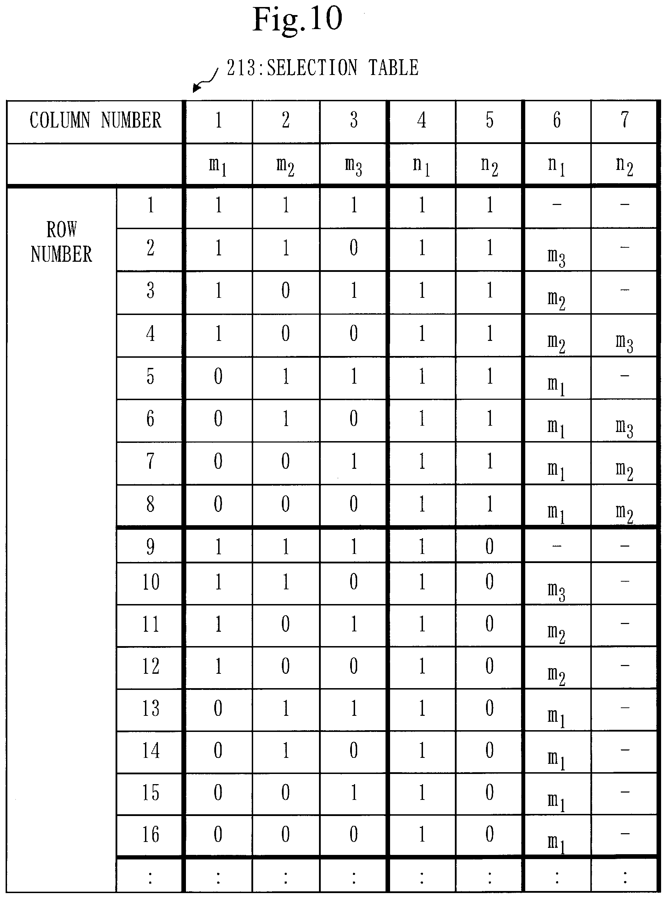

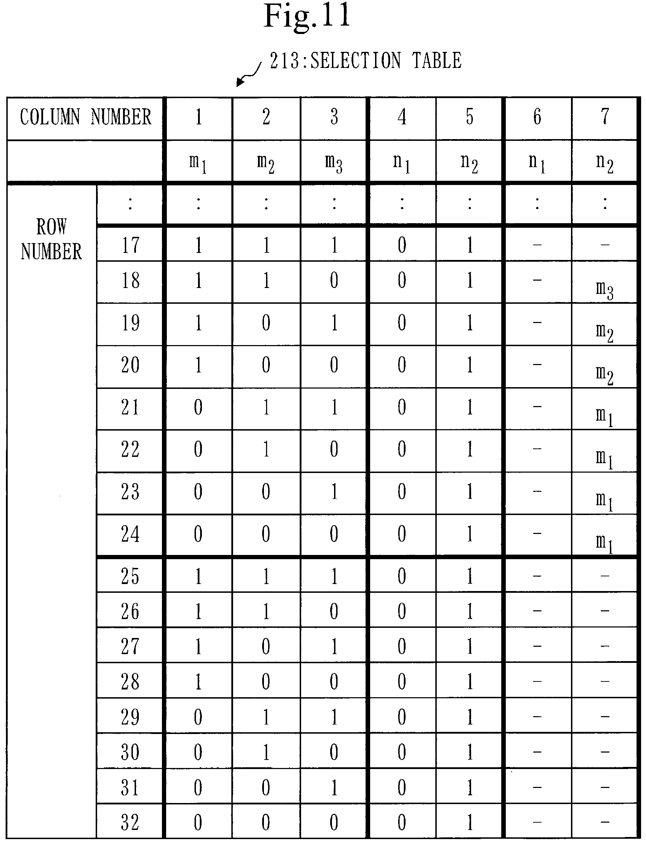

Based on Fig. 10 and Fig. 11, the structure of a selection table 213 is described.

The selection table 213 has columns of row number, failure pattern, and process information, respectively.

The column where row numbers are written is a column of row number.

A first column to a fifth column are columns of failure pattern.

In the first column to the third column, control system identifiers (m₁, m₂, and m₃) are set in the descending order of priority. The control system identifiers identify the control devices 200 of the control system. That is, the control device m₁ has the highest priority, followed by the control device m₂ and then the control device m₃. The control device 200 with a higher priority is the control device 200 assigned with a process with a higher priority. For example, a process with a higher priority is a process for safely stopping when continuation of driving becomes impossible. For example, a process with a lower priority is a process for adjusting tints when an image is displayed or a process not relating to safety.

In the fourth column and the fifth column, standby system identifiers (n₁ and n₂) are set.

The failure pattern indicates a state for each control device 200. In the failure pattern, a value of 1 means a normal state, and a value of 0 means a failure state.

A sixth column and a seventh column are columns of process information.

In the sixth column and the seventh column, the standby system identifiers (n₁ and n₂) are set.

The process information indicates a control system identifier (m₁, m₂, or m₃) for each control device 200 of the standby system. In the process information, the control system identifier corresponds to the identifier of a process assigned to the control device 200 of the standby system. That is, the process having being executed by the control device 200 identified with the control system identifier is assigned to the control device 200 of the standby system. Also, a hyphen means that a process to be newly assigned is absent, that is, unnecessity.

The selection table 213 corresponds to the selection table 211 in Embodiment 1 as follows.

The first column to the fifth column of the selection table 213 correspond to the columns of failure pattern in the selection table 211.

The sixth column (n₁) or the seventh column (n₂) of the selection table 213 corresponds to the columns of process information in the selection table 211. That is, in the control device n₁ of the standby system, the selection table 211 has the sixth column (n₁) as a column of process information. Also, in the control device n₂ of the standby system, the selection table 211 has the seventh column (n₂) as a column of process information.

The selection table 213 corresponds to the selection table 212 in Embodiment 2 as follows.

The failure patterns indicated in the first column to the fifth column of the selection table 213 correspond to the failure patterns for specifying individual regions of the selection table 212.

The process information indicated in the sixth column (m) or the seventh column (n₂) in the selection table 213 corresponds to the process information set in the individual regions in the selection table 212. That is, in the control device m of the standby system, the process information indicated in the sixth column (n₁) of the selection table 213 is set in the individual region in the selection table 212. In the control device n2 of the standby system, the process information indicated in the seventh column (n₂) of the selection table 213 is set in the individual region in the selection table 212.

### ***Description of Operation***

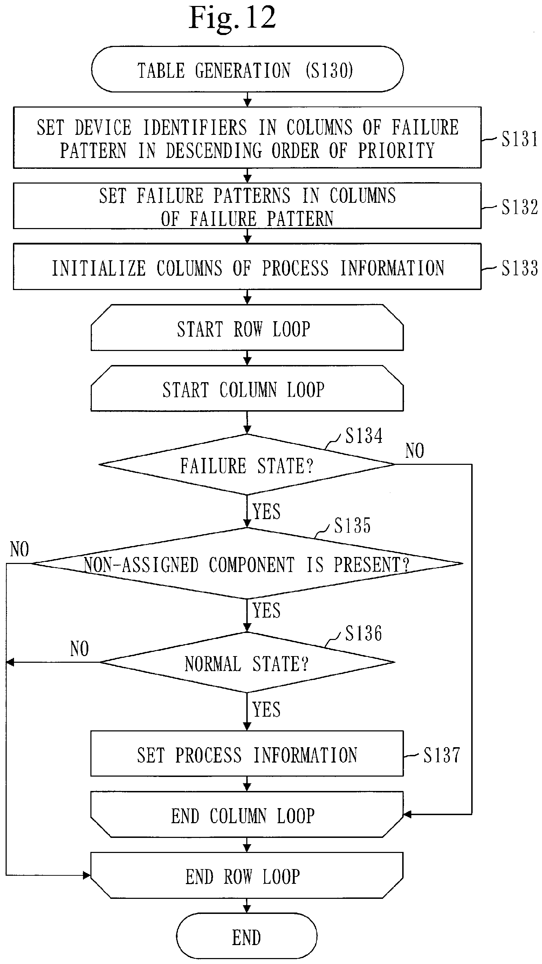

Based on Fig. 12, table generation (S130) is described.

Table generation (S130) is a process for generating the selection table 213, and is executed by the generation unit 220.

At step S131, based on priority information, the generation unit 220 registers control system identifiers and standby system identifier in the columns of failure pattern in the descending order of priority.

The priority information is information indicating a priority for each control device 200, and is stored in advance in the storage unit 291.

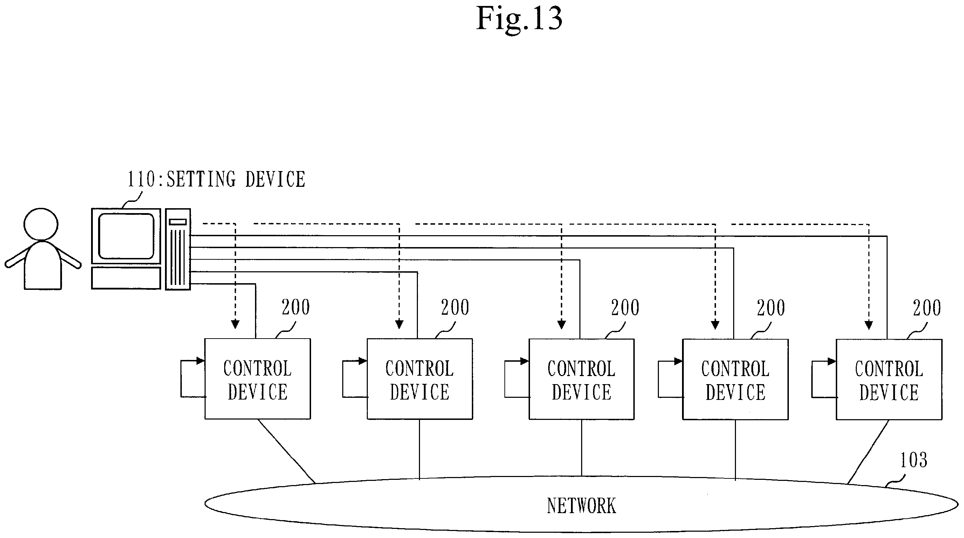

As illustrated in Fig. 13, the priority information is set from a setting device 110 to each control device 200. Specifically, for each control device 200, the setting device 110 is connected to the control device 200, and priority information is inputted from the setting device 110 to the control device 200 as a connection destination.

An arrow with a broken line indicates a flow of priority information.

An arrow with a solid line indicates that the selection table 213 is generated based on the priority information for each control device 200.

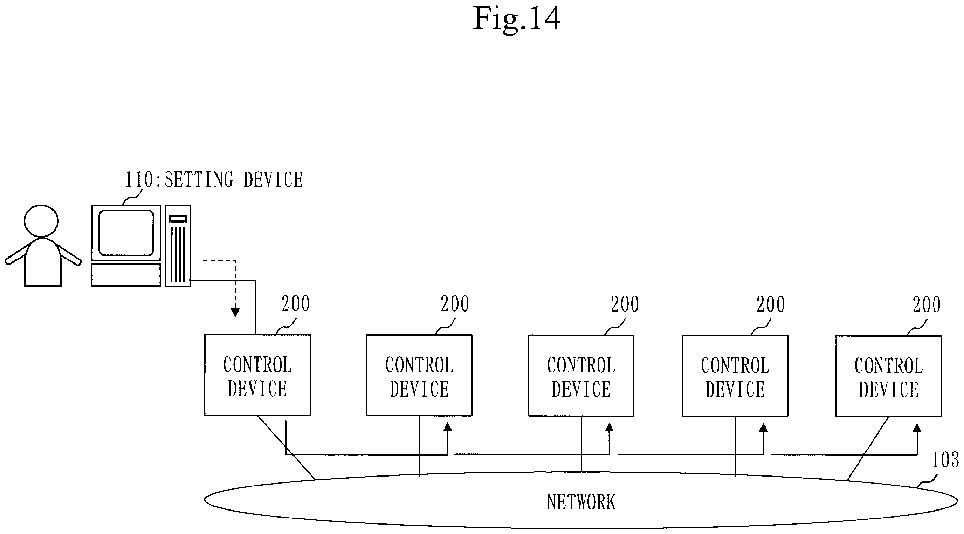

As illustrated in Fig. 14, the priority information may be set from the setting device 110 to one control device 200.

In this case, that control device 200 generates the selection table 213 of each control device 200 based on the priority information, and distributes the selection table 213 to each control device 200.

An arrow from the setting device 110 to the control device 200 indicates a flow of priority information.

An arrow between the control devices 200 indicates a flow of the selection table 213.

Returning back to Fig. 12, description continues from step S132.

At step S132, the generation unit 220 sets failure patterns in columns of failure pattern.

Specifically, the generation unit 220 adds rows as many as the number 2^{∧}N of failure patterns to the selection table 213, and sets one failure pattern in the column of failure pattern in each row.

At step S133, the generation unit 220 initializes columns of process information.

Specifically, the generation unit 220 sets a hyphen (-) in each component in the column of the process information.

The processes from the start of a row loop to the end of the row loop are executed for each row of the selection table 213 in the ascending order of the row numbers indicated in the selection table 213.

The processes from the start of a column loop to the end of the column loop are executed for each column of the selection table 213 in the ascending order of the column numbers indicated in the selection table 213.

At step S134, the generation unit 220 determines whether a target column on a target row indicates a failure state (0).

When the target column on the target row indicates a failure state (0), the process proceeds to step S135.

When the target column on the target row indicates a normal state (1), the process on the target column ends.

At step S135, the generation unit 220 determines whether a non-assigned component is present in the target row.

A non-assigned component is a component having a control system identifier (process identifier) not set in a column of process information, that is, a component having a hyphen (-) set in a column of process information.

When a non-assigned component is present in the target row, the process proceeds to step S136.

When a non-assigned component is absent in the target row, the process on the target row ends.

At step S136, the generation unit 220 determines whether a relevant column on the target row indicates a normal state (1).

The relevant column is a column corresponding to the column of the non-assigned component among the columns of failure pattern. Specifically, the relevant column is a column where the same standby system identifier as the standby system identifier set in the column of the non-assigned component is set among the columns of failure pattern.

For example, in Fig. 10, when the column of the non-assigned component is the sixth column, the standby system identifier set in the column of the non-assigned component is n₁. Therefore, among the first column to the fifth column as columns of failure patterns, the fourth column having the standby system identifier n₁ set therein is the relevant column.

When the relevant column in the target row indicates a normal state (1), the process proceeds to step S137.

When the relevant column in the target row indicates an abnormal state (0), the process on the target row ends.

At step S137, the generation unit 220 sets process information to a non-assigned component.

Specifically, the generation unit 220 sets the control system identifier set on the target column to the non-assigned component.

### ***Effects of Embodiment 3***

The control device 200 can generate the selection table 213 based on the priority information. That is, on the basis of process priority, the control device 200 can efficiently generate the selection table 211 in Embodiment 1 and the selection table 212 in Embodiment 2.

### ***Supplement to Embodiments***

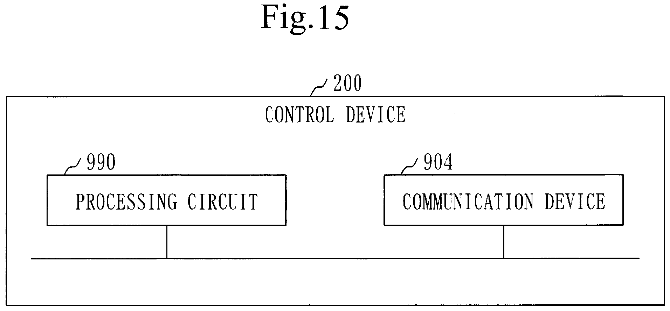

Based on Fig. 15, the hardware structure of the control device 200 is described.

The control device 200 includes a processing circuitry 990.

The processing circuitry 990 is hardware for implementing the control unit 201, the detection unit 202, the execution unit 203, the selection unit 210, the generation unit 220, and the storage unit 291.

The processing circuitry 990 may be dedicated hardware or the processor 901 for implementing the program stored in the memory 902.

When the processing circuitry 990 is dedicated hardware, the processing circuitry 990 is, for example, a single circuit, composite circuit, programmed processor, parallel-programmed processor, ASIC, FPGA, or a combination of these. ASIC is an abbreviation for Application Specific Integrated Circuit, and FPGA is an abbreviation for Field Programmable Gate Array.

The control device 200 may be provided with a plurality of processing circuits which replace the processing circuitry 990. The plurality of processing circuits share the role of the processing circuitry 990.

The functions of the control device 200 may be partially implemented by dedicated hardware and the rest may be implemented by software or firmware.

In this manner, the processing circuitry 990 can be implemented by hardware, software, firmware, or a combination of these.

The embodiments are merely examples of preferred embodiments, and are not intended to limit the technical scope of the present invention. The embodiments may be partially implemented or may be implemented with another embodiment. The procedures described by using flowcharts and so forth may be changed as appropriate.

### Reference Signs List

100: controlling system; 101: I/O device; 102: epuipment; 103: network; 104: production facility; 110: setting device; 200: control device; 201: control unit; 202: detection unit; 203: execution unit; 210: selection unit; 211: selection table; 212: selection table; 213: selection table; 220: generation unit; 291: storage unit; 292: communication unit; 901: processor; 902: memory; 903: auxiliary storage device; 904: communication device; 990: processing circuitry

## Claims

1. A control device (200) included in a plurality of control devices provided to a controlling system (100), the plurality of control devices being configured of a plurality of control devices of a control system and at least a control device of a standby system, the control device comprising:
a selection unit (210) to select, when a failure of at least any of the plurality of control devices (200) is detected, from a selection table (212) in which a plurality of failure patterns indicating a value in binary form, the value in binary form representing whether a failure is present or absent in all of the control devices of the control system and whether a failure is present or absent in all of the control devices of the standby system, and a plurality of pieces of process information indicating a process to be newly executed or no process to be newly executed are associated with each other, process information associated with a failure pattern of the controlling system (100); and
an execution unit (203) to execute, when the selected process information indicates a process, the process indicated by the selected process information, wherein the value in binary form is a value represented as a bit string formed of a plurality of bits,
one bit in the bit string indicates a bit value representing a state of one control device (200),
each process information is set in a memory region with a value including the value in binary form indicated by the failure pattern or a value acquired by adding a base address to the value in binary form indicated by the failure pattern taken as a memory address, and
the selection unit (210) acquires the process information from the memory region with the value including the value in binary form indicated by the failure pattern or the value acquired by adding the base address to the value in binary form indicated by the failure pattern taken as the memory address.

2. The control device (200) according to claim 1, wherein
the plurality of failure patterns included in the selection table (211) are identical to a plurality of failure patterns included in another selection table as a selection table for use in another control device (200), and
the plurality of pieces of process information included in the selection table (211) are different from a plurality of pieces of process information included in the other selection table.

3. The control device (200) according to any one of claims 1 and 2, comprising:
a generation unit (220) to generate the selection table (213) based on priority information indicating a priority of each of the plurality of control devices (200).

4. An alternative selection program for a control device (200) included in a plurality of control devices included in a controlling system (100), the plurality of control devices being configured of a plurality of control devices of a control system and at least a control device of a standby system, the alternative selection program that causes a computer to execute:
a selection process of selecting, when a failure of at least any of the plurality of control devices (200) is detected, from a selection table (212) in which a plurality of failure patterns indicating a value in binary form, the value in binary form representing whether a failure is present or absent in all of the control devices of the control system and whether a failure is present or absent in all of the control devices of the standby system, and a plurality of pieces of process information indicating a process to be newly executed or no process to be newly executed are associated with each other, process information associated with a failure pattern of the controlling system (100); and
an execution process of executing, when the selected process information indicates a process, the process indicated by the selected process information, wherein
the value in binary form is a value represented as a bit string formed of a plurality of bits,
one bit in the bit string indicates a bit value representing a state of one control device (200),
each process information is set in a memory region with a value including the value in binary form indicated by the failure pattern or a value acquired by adding a base address to the value in binary form indicated by the failure pattern taken as a memory address, and
the selection process acquires the process information from the memory region with the value including the value in binary form indicated by the failure pattern or the value acquired by adding the base address to the value in binary form indicated by the failure pattern taken as the memory address.

## Patentansprüche

1. Steuervorrichtung (200), die in einer Vielzahl von Steuervorrichtungen enthalten ist, die für ein Steuerungssystem (100) bereitgestellt sind, wobei die Vielzahl von Steuervorrichtungen aus einer Vielzahl von Steuervorrichtungen eines Steuersystems und zumindest einer Steuervorrichtung eines Bereitschaftssystems konfiguriert ist, wobei die Steuervorrichtung Folgendes umfasst:
eine Auswahleinheit (210) zum Auswählen von Prozessinformationen, die einem Ausfallmuster des Steuerungssystems (100) zugeordnet sind, wenn ein Ausfall von zumindest einer der Vielzahl von Steuervorrichtungen (200) detektiert wird, aus einer Auswahltabelle (212), in der eine Vielzahl von Ausfallmustern einen Wert in binärer Form angeben, wobei der Wert in binärer Form darstellt, ob ein Ausfall in allen Steuervorrichtungen des Steuersystems vorliegt oder nicht vorliegt und ob ein Ausfall in allen Steuervorrichtungen des Bereitschaftssystems vorliegt oder nicht vorliegt, und eine Vielzahl von Prozessinformationsstücken, die angeben, dass ein Prozess neu ausgeführt wird oder kein Prozess neu ausgeführt wird, einander zugeordnet sind; und
eine Ausführungseinheit (203) zum Ausführen des durch die ausgewählten Prozessinformationen angegebenen Prozesses, wenn die ausgewählten Prozessinformationen einen Prozess angeben, wobei der Wert in binärer Form ein Wert ist, der als aus einer Vielzahl von Bits bestehenden Bitfolge dargestellt ist,
ein Bit in der Bitfolge einen Bitwert anzeigt, der den Zustand einer Steuervorrichtung (200) darstellt,
wobei die Prozessinformationen jeweils in einem Speicherbereich mit einem Wert, der den Wert in binärer Form umfasst, der von dem Ausfallmuster angegeben wird, oder einem Wert, der durch Hinzufügen der Basisadresse zu dem von dem Ausfallmuster angegebenen Wert in binärer Form, die als eine Speicheradresse verwendet wird, gesetzt werden, und
die Auswahleinheit (210) die Prozessinformationen von dem Speicherbereich mit dem Wert, der den Wert in binärer Form umfasst, der durch das Ausfallmuster angegeben wird, oder dem Wert, der durch Hinzufügen einer Basisadresse zu dem von dem Ausfallmuster angegebenen Wert in binärer Form, die als die Speicheradresse verwendet wird, erhalten wird, erhält.

2. Steuervorrichtung (200) nach Anspruch 1, wobei
die Vielzahl von Ausfallmustern, die in der Auswahltabelle (211) enthalten sind, mit einer Vielzahl von Ausfallmustern, die in einer anderen Auswahltabelle als eine Auswahltabelle zur Verwendung in einer anderen Steuervorrichtung (200) enthalten sind, identisch sind, und
die Vielzahl von Prozessinformationen, die in der Auswahltabelle (211) enthalten sind, sich von einer Vielzahl von Prozessinformationsstücken, die in der anderen Auswahltabelle enthalten sind, unterscheiden.

3. Steuervorrichtung (200) nach einem der Ansprüche 1 oder 2, umfassend:
eine Erzeugungseinheit (220) zum Erzeugen der Auswahltabelle (213) auf der Basis von Prioritätsinformationen, die eine Priorität einer jeden der Vielzahl von Steuervorrichtungen (200) angibt.

4. Alternatives Auswahlprogramm für eine Steuervorrichtung (200), die in einer Vielzahl von Steuervorrichtungen, die in einem Steuerungssystem (100) enthalten sind, enthalten ist, wobei die Vielzahl von Steuervorrichtungen aus einer Vielzahl von Steuervorrichtungen eines Steuersystems und zumindest einer Steuervorrichtung eines Bereitschaftssystems konfiguriert ist, wobei das alternative Auswahlprogramm einen Computer dazu bringt, Folgendes auszuführen:
einen Auswahlprozess des Auswählens von Prozessinformationen, die einem Ausfallmuster des Steuerungssystems (100) zugeordnet sind, wenn ein Ausfall von zumindest einer der Vielzahl von Steuervorrichtungen (200) detektiert wird, aus einer Auswahltabelle (212), in der eine Vielzahl von Ausfallmustern einen Wert in binärer Form angeben, wobei der Wert in binärer Form darstellt, ob ein Ausfall in allen Steuervorrichtungen des Steuersystems vorliegt oder nicht vorliegt und ob ein Ausfall in allen Steuervorrichtungen des Bereitschaftssystems vorliegt oder nicht vorliegt, und eine Vielzahl von Prozessinformationsstücken, die angeben, dass ein Prozess neu ausgeführt wird oder kein Prozess neu ausgeführt wird, einander zugeordnet werden; und
ein Ausführungsprozess des Ausführens des durch die ausgewählten Prozessinformationen angezeigten Prozesses, wenn die ausgewählten Prozessinformationen einen Prozess angeben, wobei
der Wert in binärer Form ein Wert ist, der als aus einer Vielzahl von Bits bestehenden Bitfolge dargestellt ist,
ein Bit in der Bitfolge einen Bitwert anzeigt, der den Zustand einer Steuervorrichtung (200) darstellt,
wobei die Prozessinformationen jeweils in einem Speicherbereich mit einem Wert, der den Wert in binärer Form umfasst, der von dem Ausfallmuster angezeigt wird, oder einem Wert, der durch Hinzufügen einer Basisadresse zu dem von dem Ausfallmuster angezeigten Wert in binärer Form, die als eine Speicheradresse verwendet wird, gesetzt werden, und
der Auswahlprozess die Prozessinformationen von dem Speicherbereich mit dem Wert, der den Wert in binärer Form umfasst, der durch das Ausfallmuster angezeigt wird, oder dem Wert, der durch Hinzufügen der Basisadresse zu dem von dem Ausfallmuster angezeigten Wert in binärer Form, die als Speicheradresse verwendet wird, erhalten wird, erhält.

## Revendications

1. Dispositif de commande (200) inclus dans une pluralité de dispositifs de commande fournie à un système de commande (100), la pluralité de dispositifs de commande étant configurée d'une pluralité de dispositifs de commande d'un système de commande et d'au moins un dispositif de commande d'un système de secours, le dispositif de commande comprenant :
une unité de sélection (210) pour sélectionner, lorsqu'une défaillance d'au moins l'un quelconque de la pluralité de dispositifs de commande (200) est détectée, à partir d'une table de sélection (212) dans laquelle une pluralité de motifs de défaillance indiquant une valeur sous une forme binaire, le valeur sous forme binaire représentant si une défaillance est présente ou absente dans tous les dispositifs de commande du système de commande et si une défaillance est présente ou absente dans tous les dispositifs de commande du système de secours, et une pluralité de pièces d'informations de processus indiquant qu'un processus à exécuter nouvellement ou qu'aucun processus à exécuter nouvellement sont associées mutuellement, des informations de processus associées à un motif de défaillance du système de commande (100) ; et
une unité d'exécution (203) pour exécuter, lorsque les informations de processus sélectionnées indiquent un processus, le processus indiqué par les informations de processus sélectionnées, dans lequel la valeur sous forme binaire est une valeur représentée comme une chaîne de bits formée d'une pluralité de bits,
un bit dans la chaîne de bits indique une valeur de bit représentant un état d'un dispositif de commande (200),
chaque information de processus est établie dans une région de mémoire avec une valeur comprenant la valeur sous forme binaire indiquée par le motif de défaillance ou une valeur acquise en ajoutant une adresse de base à la valeur sous forme binaire indiquée par le motif de défaillance prise comme adresse de mémoire, et
l'unité de sélection (210) acquiert les informations de processus à partir de la région de mémoire avec la valeur comprenant la valeur sous forme binaire indiquée par le motif de défaillance ou la valeur acquise en ajoutant l'adresse de base à la valeur sous forme binaire indiquée par le motif de défaillance prise comme adresse mémoire.

2. Dispositif de commande (200) selon la revendication 1, dans lequel
la pluralité de motifs de défaillance inclus dans la table de sélection (211) sont identiques à une pluralité de motifs de défaillance inclus dans une autre table de sélection en tant que table de sélection à utiliser dans un autre dispositif de commande (200), et
la pluralité de pièces d'informations de processus incluse dans la table de sélection (211) est différente d'une pluralité de pièces d'informations de processus incluses dans l'autre table de sélection.

3. Dispositif de commande (200) selon l'une quelconque des revendications 1 et 2, comprenant :
une unité de génération (220) pour générer la table de sélection (213) sur la base d'informations de priorité indiquant une priorité de chacun de la pluralité de dispositifs de commande (200).

4. Programme de sélection alternative pour un dispositif de commande (200) inclus dans une pluralité de dispositifs de commande inclus dans un système de commande (100), la pluralité de dispositifs de commande étant configurée d'une pluralité de dispositifs de commande d'un système de commande et d'au moins un dispositif de commande d'un système de secours, le programme de sélection alternative qui amène un ordinateur à exécuter :
un processus de sélection consistant à sélectionner, lorsqu'une défaillance d'au moins l'un quelconque de la pluralité de dispositifs de commande (200) est détectée, à partir d'une table de sélection (212) dans laquelle une pluralité de motifs de défaillance indiquant une valeur sous une forme binaire, la valeur sous forme binaire représentant si une défaillance est présente ou absente dans tous les dispositifs de commande du système de commande et si une défaillance est présente ou absente dans tous les dispositifs de commande du système de secours, et une pluralité d'informations de processus indiquant un processus devant être nouvellement exécuté ou aucun processus devant être nouvellement exécutés sont associés mutuellement, des informations de processus associées à un modèle de défaillance du système de commande (100) ; et
un processus d'exécution consistant à exécuter, lorsque les informations de processus sélectionnées indiquent un processus, le processus indiqué par les informations de processus sélectionnées, dans lequel
la valeur sous forme binaire est une valeur représentée sous la forme d'une chaîne de bits formée d'une pluralité de bits,
un bit dans la chaîne de bits indique une valeur de bit représentant un état d'un dispositif de commande (200),
chaque information de processus est établie dans une région de mémoire avec une valeur comprenant la valeur sous forme binaire indiquée par le motif de défaillance ou une valeur acquise en ajoutant une adresse de base à la valeur sous forme binaire indiquée par le motif de défaillance prise comme adresse de mémoire, et
le processus de sélection acquiert les informations de processus à partir de la région de mémoire avec la valeur comprenant la valeur sous forme binaire indiquée par le motif de défaillance ou la valeur acquise en ajoutant l'adresse de base à la valeur sous forme binaire indiquée par le motif de défaillance prise comme adresse de mémoire.
